# EUROPÄISCHE PATENTSCHRIFT

(11) **EP 2 986 661 B1**
(45) Veröffentlichungstag und Bekanntmachung des Hinweises auf die Patenterteilung: **26.06.2019**
(21) Anmeldenummer: 14716572.4
(22) Anmeldetag: 10.04.2014
(51) Int. Cl.: C08J 9/00, C08K 5/01

(54) **PUR-SCHAUM MIT VERGRÖBERTER ZELLSTRUKTUR**
PUR FOAM WITH ENLARGED CELL STRUCTURE
MOUSSE PUR A STRUCTURE CELLULAIRE RENDUE PLUS GROSSIERE

(30) Priorität: 19.04.2013 DE 102013207117
(43) Veröffentlichungstag der Anmeldung: 24.02.2016
(73) Patentinhaber: Evonik Degussa GmbH, 45128 Essen (DE)
(72) Erfinder: EMMRICH-SMOLCZYK, Eva, 45133 Essen (DE); MODRO, Harald, 45966 Gladbeck (DE); ALTHOFF, Ralf, 45721 Haltern am See (DE); ZIEGLER, Rainer, 44623 Herne (DE)
(74) Vertreter: Evonik Patent Association
(86) Internationale Anmeldenummer: PCT/EP2014/057235
(87) Internationale Veröffentlichungsnummer: WO 2014/170198

(56) Entgegenhaltungen:
- GB-A- 1 085 037
- US-A- 3 201 359
- US-A- 5 075 343
- US-A- 6 080 800

## Beschreibung

Die vorliegende Erfindung liegt auf dem Gebiet der Polyurethane und betrifft insbesondere ein Verfahren zur Herstellung von Polyurethanschaum unter Einsatz eines Wachsadditives. Sie betrifft weiterhin Polyurethanschaum, der durch ein entsprechendes Verfahren erhältlich ist. Sie betrifft die Verwendung des Wachsadditives bei der Herstellung von Polyurethanschäumen. Außerdem betrifft sie eine Zusammensetzung zur Herstellung von Polyurethanschaum.

Polyurethane unterschiedlichster Art sind bekannt und können durch die Polymerisation von Diisocyanaten, wie z. B. 4,4'-Methylenbis(phenylisocyanat), kurz MDI, oder 2,4-Toluoldiisocyanat, kurz TDI, mit Polyetherpolyolen oder Polyesterpolyolen hergestellt werden. Polyetherpolyole können z. B. durch Alkoxylierung von polyhydroxyfunktionellen Startern gefertigt werden. Geläufige Starter sind z. B. Glykole, Glycerin, Trimethylolpropan, Pentaerythrit, Sorbit oder Saccharose. Von besonderem Interesse sind Polyurethanschäume, die z. B. in der Automobilindustrie oder für den Möbelsektor nachgefragt werden. Bei der Herstellung von Polyurethanschäumen können zusätzliche Treibmittel zum Einsatz kommen, wie z. B. Pentan, Methylenchlorid oder andere Halogenkohlenwasserstoffe, Aceton oder Kohlenstoffdioxid. Üblicherweise können zur Stabilisierung des Polyurethanschaums oberflächenaktive Substanzen, insbesondere Tenside eingesetzt werden. Eine Vielzahl verschiedener Polyurethanschäume, wie beispielsweise Heißweichschaum, Kaltschaum, Esterschaum, PUR-Hartschaum und PIR-Hartschaum sind bekannt.

Ein grundsätzliches Anliegen im Zusammenhang mit der Bereitstellung von Polyurethanschäumen liegt darin, bei der Schaumherstellung Einfluss auf die Zellstruktur des resultierenden Schaumes zu nehmen.

GB 1,085,037 beschreibt ein Verfahren zur Herstellung von Polyurethanschaumstoffen, wobei Zellenregulatoren verwendet werden, z.B. mikrokristallines Wachs.

US 6,080,800 beschreibt ein Verfahren zur Herstellung von Polyurethanschaum, wobei ein zellöffnendes Additiv eingesetzt wird, z.B. eine wässrige Dispersion eines Wachses, insbesondere eines mikrokristallinen Wachses.

US 3,201,359 beschreibt ein Verfahren zur Herstellung eines mit Wachs versetzten Polyurethanschaums.

Die Aufgabe der vorliegenden Erfindung war es vor diesem Hintergrund, Polyurethanschäume bereitzustellen, welche eine vergröberte Zellstruktur aufweisen.

"Vergröberte Zellstruktur" bedeutet bezogen auf die einzelnen Zellen des Zellkollektivs eine Zunahme der Größe der einzelnen Zellen und damit mit Blick auf die Zellstruktur des Schaumes eine Abnahme der Anzahl der Zellen pro Längeneinheit, welche z.B. mikroskopisch ermittelbar ist.

Diese Aufgabe wird vom Gegenstand der Erfindung gelöst.

Überraschenderweise wurde im Rahmen der vorliegenden Erfindung gefunden, dass der Einsatz bestimmter Wachse als Additiv bei der Herstellung von Polyurethanschäumen zu einer Vergröberung der Zellstruktur des Schaumes führt, so dass also eine Zunahme der Zellgröße der einzelnen Zellen und eine Abnahme der Anzahl der Zellen pro Längeneinheit zu beobachten ist.

Der Gegenstand der Erfindung ist ein Verfahren zur Herstellung von Polyurethanschaum durch Umsetzung einer oder mehrerer Polyolkomponenten mit einer oder mehreren Isocyanatkomponenten, wobei als Additiv Wachs mit einem Erstarrungspunkt im Bereich von 40°C bis 80°C eingesetzt wird nach Maßgabe des Anspruchs 1.

Dieses erfindungsgemäße Verfahren ermöglicht die Vergröberung der Zellstruktur des resultierenden Schaumes im Sinne einer Zunahme der Zellgröße der einzelnen Zellen und einer Abnahme der Anzahl der Zellen pro Längeneinheit im Vergleich zu Schaum, der in analoger Weise aber ohne den Einsatz des Wachsadditivs hergestellt wird. Die Anzahl der Zellen pro Längeneinheit kann man z.B. dadurch bestimmen, dass man einen Schaumblock aufschneidet und die oberste Ebene der Schnittfläche schwarz einfärbt, z.B. mit einem Stift. Mit einem Vergrößerungsglas kann anschließend optisch die Anzahl der Zellen gezählt werden, die sich innerhalb eines Zentimeters befinden. Mit der Erfindung geht als weiterer Vorteil einher, dass das Feuchtigkeitsabführvermögen des Schaumes zunimmt, insbesondere mit Blick auf Wasserdampf. Dies ist ein bedeutender Vorteil mit Blick auf die sogenannte Atmungsaktivität des Materials, die oft vom Verbraucher gefordert wird. Weiter wird somit die Herstellung von Polyurethanschäumen ermöglicht, die eine gesteigerte Fähigkeit aufweisen, Wärme abzuführen. Ein weiterer besonderer Vorteil der Erfindung liegt darin, dass der Effekt der Vergröberung der Zellstruktur homogen über den gesamten Schaum beobachtet wird. Damit geht noch ein weiterer Vorteil einher, nämlich dass eine besonders regelmäßige Dichteverteilung gewährleistet wird. Besonders vorteilhaft ist zudem, dass die physikalischen Eigenschaften des Schaumes trotz der Vergröberung der Zellstruktur nicht negativ beeinflusst werden. Somit ermöglicht es die vorliegende Erfindung, auf bewährte Verfahren zur Herstellung von Polyurethanschaum zurückzugreifen und durch die Zugabe des erfindungsgemäß einzusetzenden Wachses eine Vergröberung der Zellstruktur herbeizuführen.

Wachse sind dem Fachmann an sich bekannt. Nach ihrer Herkunft teilt man die Wachse in drei Klassen ein, nämlich (a) natürliche Wachse, insbesondere mit den 3 Untergruppen (a1) pflanzliche Wachse (z.B. Baumwollwachs, Carnaubawachs, Candelillawachs, Espartowachs, Guarumawachs, Japanwachs, Korkwachs, Montanwachs, Ouricurywachs, Reiskeimölwachs, Zuckerrohrwachs), (a2) tierische Wachse (z.B. Bienenwachs, Bürzeldrüsenfett, Wollwachs, Schellackwachs, Walrat) und (a3) Mineralwachse (z.B. Mikrowachse, Ceresin, Ozokerit), (b) chemisch modifizierte Wachse, insbesondere mit der Untergruppe Hartwachse (z.B. hydrierte Jojobawachse, Montanwachs, Sasolwachse) und (c) synthetische Wachse, wie z.B. Polyalkylenwachse (Polyolefinwachse, Polyethylenwachse, Polypropylenwachse), Polyethylenglycolwachse, Amidwachse.

Grundsätzlich können im Rahmen dieser Erfindung all jene Wachse oder deren Gemische eingesetzt werden, die einen Erstarrungspunkt im Bereich von 40°C bis 80°C aufweisen.

Erstarrungspunkt ist die Bezeichnung für die Temperatur, bei der ein flüssiger Stoff in den festen Zustand (Aggregatzustand) übergeht. Die Bestimmung des Erstarrungspunktes von Wachsen ist dem Fachmann bekannt, insbesondere kann sie gemäß der ISO 2207 erfolgen.

Gemäß einer bevorzugten Ausführungsform der Erfindung weist das Wachs einen Erstarrungspunkt im Bereich von 50°C bis 80°C, vorzugsweise von 55°C bis 80°C, insbesondere von 60°C bis 75°C auf. Hierdurch lässt sich die Vergröberung der Zellstruktur besonders effizient gestalten.

Wenn das erfindungsgemäß einzusetzende Wachs aus Mineralwachsen, synthetischen Wachsen oder deren Gemischen ausgewählt ist, so liegt eine weitere bevorzugte Ausführungsform der Erfindung vor.

Das Wachs weist eine überwiegend mikrokristalline Struktur auf, insbesondere ist es ein mikrokristallines Wachs. Überwiegend mikrokristalline Struktur bedeutet, dass > 50 Gew.-% des einzusetzenden Wachses ein mikrokristallines Wachs ist. Insbesondere kann ausschließlich mikrokristallines Wachs eingesetzt werden, was einer besonders bevorzugten Ausführungsform der Erfindung entspricht.

"Mikrokristallines Wachs" (auch Mikrowachs genannt) ist ein feststehender technischer Begriff, der bekanntermaßen ein komplexes Vielstoffgemisch, üblicherweise beinhaltend gesättigte Kohlenwasserstoffe, umfassend langkettige lineare n-Alkane und insbesondere langkettige verzweigte iso-Alkane, und weiterhin noch enthaltend Alkyl-substituierte Cycloparaffine und Alkyl-substituierte bzw. Naphthen-substituierte Aromaten bezeichnet, das üblicherweise aus den Rückständen der Erdölaufbereitung in Raffinerien gewonnen wird. Im Gegensatz zu den Paraffinwachsen besitzen Mikrowachse einen erhöhten Anteil an iso- und cyclo-Alkanen. Der Anteil an linearen n-Alkanen liegt in der Regel deutlich unter 40 %, beispielsweise bei ≤ 20 %. Der Anteil an Iso- und Cyclo-Alkanen liegt in der Regel deutlich über 60 %, z.B. bei ≥ 80%, jeweils bezogen auf ein Mikrowachs. Mikrokristallines Wachs kann bei Bedarf mit verschiedenen Methoden aufgehellt werden. Insbesondere können Mikrowachse z.B. mit Hilfe der Hochdruckhydrierung nahezu vollständig von allen Verunreinigungen und Schadstoffen befreit werden, so dass Mikrowachs als E905 in der EU sogar als Lebensmittelzusatzstoff zugelassen ist. Im Gegensatz zu grobkristallinem Handelsparaffin weist Mikrowachs eine sehr feine Kristallstruktur auf.

Entsprechend seiner Eigenschaften können Mikrowachse in Abhängigkeit vom Raffinationsgrad insbesondere in drei weitere Klassen eingeteilt werden, nämlich Petrolate, plastische Mikrowachse und Hartmikrowachse. Darunter sind die plastischen Mikrowachse besonders bevorzugt. Mikrowachse sind kommerziell ohne weiteres von verschiedenen Herstellern breit verfügbar, z.B. von Alpha Wax BV, Niederlande, oder z.B. von Sasol Wax GmbH, Deutschland.

Es entspricht also einer bevorzugten Ausführungsform der Erfindung, in dem erfindungsgemäßen Verfahren ein (vorzugsweise plastisches) Mikrowachs mit einem Erstarrungspunkt im Bereich von 50°C bis 85°C, vorzugsweise von 55°C bis 80°C, insbesondere von 60°C bis 75°C einzusetzen. In einer besonders bevorzugten Ausführungsform der Erfindung wird demnach ein (vorzugsweise plastisches) Mikrowachs mit einem Erstarrungspunkt im Bereich von 60 bis 75°C eingesetzt. Hierdurch kann in besonders wirkungsvoller Weise die angestrebte Vergröberung der Zellstruktur des Schaumes realisiert werden ohne die physikalischen Eigenschaften des Schaumes, insbesondere die Stauchhärte wesentlich zu beeinflussen.

Grundsätzlich kann der Fachmann die Menge des einzusetzenden Wachses anhand von wenigen Handversuchen seinen Bedürfnissen entsprechend selbst eruieren. Es entspricht der Erfindung, wenn die Menge an Wachs so gewählt wird, dass pro 100 Gewichtsteilen Polyol, umfassend alle eingesetzten Polyolkomponenten, 0,0001 bis 5 Gewichtsteile, vorzugsweise 0,0001 bis 1 Gewichtsteile, insbesondere 0,0001 bis 0,1 Gewichtsteile, wie z.B. 0,0002 bis 0,05 Gewichtsteile, Wachs eingesetzt werden.

Es entspricht also einer besonders bevorzugten Ausführungsform der Erfindung, in dem erfindungsgemäßen Verfahren ein (vorzugsweise plastisches) Mikrowachs mit einem Erstarrungspunkt im Bereich von 60°C bis 75°C einzusetzen, wobei die Menge an dem Wachs so gewählt wird, dass pro 100 Gewichtsteilen Polyol, umfassend alle eingesetzten Polyolkomponenten, 0,0001 bis 5 Gewichtsteile (vorzugsweise 0,0001 bis 1 Gewichtsteile, insbesondere 0,0001 bis 0,1 Gewichtsteile) Wachs eingesetzt werden.

Es hat sich darüber hinaus insbesondere mit Blick auf die Homogenität der Zellstruktur als überaus vorteilhaft erwiesen, das Wachs in dispergierter Form einzusetzen, wobei als Dispergiermittel organische Lösemittel fungieren, insbesondere ausgewählt aus Estern ein oder mehrwertiger Alkohole, vorzugsweise den Fettsäureestern ein oder mehrwertiger Alkohole wie insbesondere Glycerinester oder Sorbitolester, sowie Polyethern, Xylol, Toluol. Bevorzugt kann eine geeignete Dispersion 0,1 bis < 10 Gew.-% (z.B. 0,2 bis 5 Gew.-%) des Wachses und zumindest 90 Gew.-% an Dispergiermittel enthalten. Nötigenfalls kann das Dispergiermittel und/oder das Wachs zur Herstellung der Dispersion erwärmt werden. Zum Herstellen entsprechender Dispersionen kann der Fachmann auf alle aus dem Stand der Technik bekannten Techniken zurückgreifen.

In einer ganz besonders bevorzugten Ausführungsform der Erfindung wird demnach ein (vorzugsweise plastisches) Mikrowachs mit einem Erstarrungspunkt im Bereich von 60°C bis 75°C eingesetzt, und zwar in einer Menge, dass pro 100 Gewichtsteilen Polyol, umfassend alle eingesetzten Polyolkomponenten, 0,0001 bis 5 Gewichtsteile (vorzugsweise 0,0001 bis 1 Gewichtsteile, insbesondere 0,0001 bis 0,1 Gewichtsteile) Wachs eingesetzt werden, wobei das Wachs in dispergierter Form eingebracht wird. Diese Vorgehensweise ist besonders förderlich, um besonders gute Resultate hinsichtlich der gewünschten Eigenschaften des Schaumes (insbesondere mit Blick auf die Vergröberung und die Homogenität der Zellstruktur) zu realisieren.

Die erfindungsgemäß einzusetzenden Wachse können in allen bekannten Verfahren zur Herstellung von Polyurethanschäumen, wie z.B. von Polyurethan-Weichschaum, Heißweichschaum, Hartschaum, Esterschaum, viscoelastischem Weichschaum oder auch High Resilience-Schaum (HR-Schaum; auch als Kaltschaum bekannt), insbesondere zur Herstellung von Polyurethanweichschäumen, als Additiv eingesetzt werden.

Herkömmliche Verfahren zur Herstellung von Polyurethanschäumen sind an sich bekannt. Auf diese kann im Rahmen dieser Erfindung grundsätzlich zurückgegriffen werden, sofern noch in erfindungsgemäßer weise Wachs als Additiv eingesetzt wird.

Vorzugsweise wird der PUR-Schaum dadurch erzeugt, dass eine Mischung enthaltend zumindest einen Urethan- und/oder Isocyanurat-Katalysator, zumindest ein Treibmittel, zumindest eine Isocyanatkomponente und zumindest eine Polyolkomponente in Gegenwart des erfindungsgemäß einzusetzenden Wachses verschäumt wird.

Neben den genannten Komponenten kann diese Mischung weitere fakultative Bestandteile aufweisen, wie z.B. optional (weitere) Treibmittel, optional Prepolymere, optional Flammschutzmittel und optional weitere Additive (die von den erfindungsgemäß einzusetzenden Wachsen verschieden sind), wie z. B. Füllstoffe, Emulgatoren, Emulgatoren, die auf der Umsetzung von hydroxyfunktionellen Verbindungen mit Isocyanat beruhen, Stabilisatoren, wie z. B. Si-haltige und nicht Si-haltige, insbesondere Si-haltige und nicht Si-haltige organische Stabilisatoren und Tenside, Viskositätssenker, Farbstoffe, Antioxidantien, UV-Stabilisatoren oder Antistatika. Es versteht sich von selbst, dass der Fachmann zur Herstellung der unterschiedlichen Polyurethanweichschaumstoff-Typen, d.h. Heiß-, Kalt- oder Ester-Polyurethanweichschaumstoffe, die hierfür jeweils notwendigen Substanzen, wie z. B. Isocyanat (Prepolymer), Polyol, , Stabilisatoren, etc. entsprechend auswählt, um den jeweils gewünschten Polyurethanweichschaumstoff-Typ zu erhalten.

Nachstehend sind eine Reihe von Schutzrechten angegeben, die geeignete Komponenten und Verfahren zur Herstellung der unterschiedlichen Polyurethanweichschaumstoff-Typen, d.h. Heiß-, Kalt- sowie Ester-Polyurethanweichschaumstoffe beschreiben, auf die im vollen Umfang Bezug genommen wird: EP 0152878 A1, EP 0409035 A2, DE 102005050473 A1, DE 19629161 A1, DE 3508292 A1, DE 4444898 A1, EP 1061095 A1, EP 0532939 B1, EP 0867464 B1, EP1683831 A1 und DE102007046860 A1.

Weitere Angaben zu verwendbaren Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.

Die nachstehenden Verbindungen, Komponenten und Additive sind lediglich beispielhaft genannt und können durch andere dem Fachmann bekannte Stoffe ersetzt werden.

Tenside, die bei der Herstellung von Polyurethanweichschaumstoffen eingesetzt werden können, können z. B. ausgewählt sein aus der Gruppe umfassend nichtionische Tenside und/oder amphotere Tenside.

Als Tenside können erfindungsgemäß auch polymere Emulgatoren, wie Polyalkylpolyoxyalkylpolyacrylate, Polyvinylpyrrolidone oder Polyvinylacetate verwendet werden. Ebenso können als Tenside/Emulgatoren Prepolymere, die durch Umsetzung von geringen Mengen von Isocyanaten mit Polyolen erhalten werden (sog. Oligourethane), und die vorzugsweise gelöst in Polyolen vorliegen, eingesetzt werden.

Als Stabilisatoren können die im Stand der Technik genannten Substanzen verwendet werden. Vorteilhafterweise können die erfindungsgemäßen Zusammensetzungen ein oder mehrere Stabilisatoren enthalten. Dabei handelt es sich insbesondere um Kohlenstoffatome aufweisende Siliziumverbindungen, vorzugsweise ausgewählt aus den Polysiloxanen, organomodifizierten Polysiloxanen, Polyethermodifizierten Polysiloxanen und Polyether-Polysiloxan-Copolymeren.

Als ein oder mehrere Kohlenstoffatome aufweisende Siliziumverbindungen können die im Stand der Technik genannten Substanzen verwendet werden. Vorzugsweise werden solche Si-Verbindungen eingesetzt, die für den jeweiligen Schaumtypen besonders geeignet sind. Geeignete Siloxane sind beispielsweise in den folgenden Schriften beschrieben: EP 0839852, EP 1544235, DE 10 2004 001 408, EP 0839852, WO 2005/118668, US 20070072951, DE 2533074, EP 1537159 EP 533202, US 3933695, EP 0780414, DE 4239054, DE 4229402, EP 867465. Die Herstellung der Si-Verbindungen kann wie im Stand der Technik beschrieben erfolgen. Geeignete Beispiele sind z. B. in US 4,147,847, EP 0493836 und US 4,855,379 beschrieben.

Besonders bevorzugte Si-Verbindungen haben die Formel (I),

R¹-Si(CH₃)₂-O-[-Si(CH₃)₂-O-]ₐ-[-Si(CH₃)R²-O-]_{b}-Si(CH₃)₂-R³ (I)

mit
R² gleich oder verschieden = -(CH₂)ₓ₋O-(CH₂-CHR⁴-O)_{y}-R⁵ oder ein C₈ bis C₂₂-Alkyl-Rest,
R¹ und R³ gleich oder verschieden = - CH₃ oder R², wobei mindestens ein Rest R¹ oder R³ gleich R² ist,
a+b+2 = 10 bis 150, vorzugsweise 25 bis 120,
b = 0 bis 25, vorzugsweise 0,5 bis 15,
x = 3 bis 10, vorzugsweise 3,
y = 1 bis 30,vorzugsweise 5 bis 25,
R⁴ = gleich oder verschieden H, -CH₃, -CH₂CH₃ oder Phenyl-Reste,
R⁵ = gleich oder verschieden H, Alkyl- oder Acyl-Reste, vorzugsweise H, CH₃ oder COCH₃.

Es kann vorteilhaft sein, wenn in den Siloxanverbindungen der Formel (I) mindestens 50 mol-% der Reste R⁴ = H, bevorzugt mindestens 90 mol-% der Reste R⁴ = H sind. Es kann außerdem vorteilhaft sein, wenn in den Siloxanverbindungen der Formel (I) bei mindestens 5 mol-% der Reste R⁴ = Methyl, bevorzugt mindestens 10 mol-% der Reste R⁴ = Methyl sind.

Vorzugsweise werden solche Siloxanverbindungen der Formel (I) verwendet, bei denen mindestens 50 mol-% der Reste R⁴ = H und bei denen mindestens 10 mol-% der Reste R⁴ = Methyl sind. Bevorzugt sind solche Siloxanverbindungen der Formel (I) vorhanden, bei denen mindestens 90 mol-% der Reste R⁴ = H und mindestens 5 mol-% der Reste R⁴ = Methyl sind.

Besonders bevorzugt sind solche Siloxanverbindungen der Formel (I) bei denen mindestens 5 mol-% der Reste R⁵ = Alkyl- oder Acyl-Reste, vorzugsweise CH₃- oder COCH₃-Reste, besonders bevorzugt Methyl-Reste sind.

Es kann vorteilhaft sein, wenn in den Siloxanverbindungen der Formel (I) die bevorzugten Reste R⁴ und R⁵ in den oben angegeben mol-Prozent-Bereichen vorliegen.

In besonders bevorzugten Siloxanverbindungen der Formel (I) ist der Quotient a/b größer 7, bevorzugt größer 8 besonders bevorzugt größer 10.

Es kann vorteilhaft sein, wenn in den Siloxanverbindungen der Formel (I) mindestens 10 Äquivalenz-% (und höchstens 50 Äquivalenz-%) der Reste R² Alkyl-Gruppen mit 8 bis 22 Kohlenstoffatomen sind (bezogen auf die Gesamtzahl der Reste R² in der Siloxanverbindung).

Vorzugsweise können von 0,05 bis 10 Massenteile Siliziumverbindungen pro 100 Massenteile Polyolkomponenten eingesetzt werden.

Insbesondere der Einsatz der vorgenannten Siliziumverbindungen in Kombination mit dem erfindungsgemäß einzusetzenden Wachs ermöglicht sehr gute Resultate im Hinblick auf die erfindungsgemäß angestrebten Schäume.

Als Biozide können handelsübliche Produkte verwendet werden, wie Chlorophen, Benzisothiazolinon, Hexahydro-1,3,5-tris(hydroxyethyl-s-triazin), Chlor-methyl-isothiazolinon, Methyl-isothiazolinon oder 1,6-Dihydroxy-2,5-dioxohexan, die unter den Handelsnamen BIT 10, Nipacide BCP, Acticide MBS, Nipacide BK, Nipacide Cl, Nipacide FC bekannt sind.

Oftmals werden bei der Herstellung von PUR-Schaum alle Komponenten außer den Polyolen und Isocyanaten vor dem Verschäumen zu einer Aktivatormischung vermischt. Diese kann dann u.a. die erfindungsgemäß einzusetzenden Wachse sowie Stabilisatoren, Katalysatoren bzw. Katalysatorkombinationen, das Treibmittel, beispielsweise Wasser, sowie eventuell weitere Additive, wie Flammschutz, Farbe, Biozide etc, je nach Rezeptur des Polyurethanweichschaumstoffs enthalten. Auch eine solche Aktivatormischung kann eine erfindungsgemäße Zusammensetzung sein.

Bei den Treibmitteln unterscheidet man zwischen chemischen und physikalischen Treibmitteln. Zu den chemischen Treibmitteln gehört z. B. Wasser, dessen Reaktion mit den Isocyanatgruppen zur Bildung von CO₂ führt. Die Rohdichte des Schaumstoffes lässt sich durch die zugegebene Wassermenge steuern, wobei die bevorzugten Einsatzmengen an Wasser zwischen 0,5 und 7,5 Teilen, bezogen auf 100,0 Teile Polyol, liegen. Darüber hinaus können alternativ und/oder auch zusätzlich, physikalische Treibmittel, wie Kohlendioxid, Aceton, Kohlenwasserstoffe, wie n-, iso- oder Cyclopentan, Cyclohexan, halogenierte Kohlenwasserstoffe, wie Methylenchlorid, Tetrafluorethan, Pentafluorpropan, Heptafluorpropan, Pentafluorbutan, Hexafluorbutan und/oder Dichlormonofluorethan, eingesetzt werden. Die Menge des physikalischen Treibmittels liegt dabei vorzugsweise im Bereich zwischen 1 bis 20 Gew.-Teilen, insbesondere 1 bis 15 Gew.-Teilen, die Menge an Wasser vorzugsweise im Bereich zwischen 0,5 bis 10 Gew.-Teilen, insbesondere 1 bis 5 Gew.-Teilen. Kohlendioxid wird von den physikalischen Treibmitteln bevorzugt, welches bevorzugt in Kombination mit Wasser als chemischem Treibmittel verwendet wird.

Zur Herstellung eines Polyurethanweichschaumstoffs wird vorzugsweise ein Gemisch (Mischung) aus Polyol, di- oder polyfunktionellem Isocyanat, erfindungsgemäß einzusetzendem Wachs, Aminkatalysator, Kalium-, Zink- und/oder Zinn-organischer-Verbindung oder andere metallhaltige Katalysatoren, Stabilisator, Treibmittel, vorzugsweise Wasser zur Bildung von CO₂ und, falls nötig, Zusatz von physikalischen Treibmitteln, gegebenenfalls unter Zugabe von Flammschutzmitteln, UV-Stabilisatoren, Farbpasten, Bioziden, Füllstoffen, Vernetzern oder sonstigen üblichen Verarbeitungshilfsmitteln, umgesetzt. Das Gemisch bzw. die Mischung können ebenfalls erfindungsgemäße Zusammensetzungen sein.

Als Isocyanate können organische Isocyanatverbindungen verwendet werden, die mindestens zwei Isocyanat-Gruppen enthalten. Generell kommen die an sich bekannten aliphatischen, cycloaliphatischen, araliphatischen und vorzugsweise aromatischen mehrwertigen Isocyanate in Frage. Besonders bevorzugt werden Isocyanate in einem Bereich von 60 bis 140 mol % relativ zu der Summe der isocyanatverbrauchenden Komponenten eingesetzt.

Im Einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie beispielsweise 2,4- und 2,6-Toluldiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluoldiisocyanaten. Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat und anderen Gruppen modifiziert wurden, sogenannte modifizierte Isocyanate.

Besonders bewährt haben sich als organische Polyisocyanate und kommen daher vorzugsweise zur Anwendung:
Toluoldiisocyanat, Gemische aus Diphenylmethandiisocyanat-Isomeren, Gemische aus Diphenylmethandiisocyanat und Polyphenylpolymethylpolyisocyanat oder Toluoldiisocyanat mit Diphenylmethandiisocyanat und/oder Polyphenylpolymethylpolyisocyanat oder so genannte Prepolymere.

Es können TDI (2,4- und 2,6-Toluoldiisocyanat-Isomerengemisch) als auch MDI (4,4'-Diphenylmethandiisocyanat) verwendet werden. Das sogenannte "crude MDI" oder "polymere MDI" enthält neben dem 4,4'- auch die 2,4'- und 2,2'-Isomeren sowie höherkernige Produkte. Als "pure MDI" bezeichnet man zweikernige Produkte aus überwiegend 2,4'- und 4,4'-Isomerengemischen bzw. deren Prepolymere. Weitere geeignete Isocyanate sind in den Patentschriften DE 444898 und EP 1095968 aufgeführt, auf die hier im vollen Umfang Bezug genommen wird.

Als Vernetzer werden niedermolekulare, gegenüber Isocyanaten reaktive mehrfunktionelle Verbindungen bezeichnet. Geeignet sind Hydroxyl- oder Amin-terminierte Substanzen, wie Glycerin, Triethanolamin (TEOA), Diethanolamin (DEOA) und Trimethylolpropan. Die Einsatzkonzentration liegt üblicherweise zwischen 0,1 und 5 Teilen, bezogen auf 100 Teile Polyol je nach Formulierung, kann aber auch davon abweichen. Bei Verwendung von crude MDI bei der Formverschäumung übernimmt dies ebenfalls eine vernetzende Funktion. Der Gehalt an niedermolekularen Vernetzern kann daher bei steigender Menge an crude MDI entsprechend reduziert werden.

Erfindungsgemäß kann sowohl Block- als auch Formverschäumung angewandt werden. Es können alle dem Fachmann bekannten Verfahren zur Herstellung von Polyurethanweichschaumstoffen verwendet werden. So kann zum Beispiel der Schäumungsprozess sowohl in horizontaler als auch in vertikaler Richtung in diskontinuierlichen oder kontinuierlichen Anlagen erfolgen. Ebenso können die erfindungsgemäßen Additivformulierungen für die CO₂-Technologie benutzt werden. Die Verwendung in Niederdruck- und Hochdruckmaschinen ist möglich, wobei die erfindungsgemäßen Formulierungen sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

Als Polyolkomponenten können alle bekannten Polyolverbindungen, insbesondere auch auf Basis von nachwachsenden Rohstoffen, eingesetzt werden.

Es kann sich hierbei z. B. um Polyether- oder Polyesterpolyole handeln, die typischerweise 2 bis 6 OH-Gruppen pro Molekül tragen und neben Kohlenstoff, Wasserstoff und Sauerstoff auch Heteroatome wie Stickstoff, Phosphor oder Halogene enthalten können; vorzugsweise werden Polyetherpolyole eingesetzt. Solche Polyole können nach bekannten Verfahren hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, dass 2 bis 3 reaktive Wasserstoffatome gebunden enthält oder durch kationische Polymerisation von Alkylenoxiden in Gegenwart von Lewis-Säuren wie beispielsweise Antimonpentachlorid oder Borfluorid-Etherat oder durch Doppelmetallcyanidkatalyse. Geeignete Alkylenoxide enthalten vorzugsweise 2 bis 4 Kohlenstoffatome im Alkylenrest. Beispiele sind Tetrahydrofuran, 1,3- Propylenoxid, 1,2-bzw. 2,3- Butylenoxid; vorzugsweise werden Ethylenoxid und/oder 1,2-Propylenoxid eingesetzt. Insbesondere kann auch Styroloxid eingesetzt werden. Die Alkylenoxide können einzeln, alternierend nacheinander oder als Mischungen verwendet werden. Als Startermolekül kommen Wasser oder 2- und 3-wertige Alkohole in Betracht, wie Ethylenglykol, 1,4-Butandiol, Propandiol-1,2 und -1,3, Diethylenglykol, Dipropylenglykol, Glycerin, Trimethylolpropan usw. Auch polyfunktionelle Polyole wie z.B. Zucker können als Starter eingesetzt werden. Die Polyetherpolyole, vorzugsweise Polyoxypropylenpolyoxyethylen-polyole besitzen vorteilhafterweise eine Funktionalität von 2 bis 8 und zahlengemittelte Molekulargewichte im Bereich von vorteilhafterweise 500 bis 8000, vorzugsweise 800 bis 4500. Weitere Polyole sind dem Fachmann bekannt und können zum Beispiel der EP-A-0 380 993 oder US-A-3 346557 entnommen werden, auf die im vollen Umfang Bezug genommen wird.

Bevorzugt werden zur Herstellung von Form- und hochelastischen Weichschaumstoffen zwei- und/oder dreifunktionelle Polyetheralkohole eingesetzt, die, bevorzugt über 50 mol-% bezogen auf die Summe der Hydroxylgruppen, an primären Hydroxylgruppen, aufweisen, insbesondere solche mit einem Ethylenoxidblock am Kettenende oder solche, die nur auf Ethylenoxid basieren.

Bevorzugt werden zur Herstellung von Blockweichschaumstoffen zwei- und/oder dreifunktionelle Polyetheralkohole eingesetzt, die sekundäre Hydroxylgruppen, bevorzugt über 80 mol-%, aufweisen, insbesondere solche mit einem Propylenoxidblock oder statistischen Propylen- und Ethylenoxidblock am Kettenende oder solche, die nur auf Propylenoxidblöcken basieren.

Als Polyolkomponenten auf Basis von nachwachsenden Rohstoffen (NOP), können z.B. die in den Patentschriften WO 2004/020497, US 2006/0229375, WO 2009/058367, WO 2006/094227, WO 2004/096882, US 2002/0103091, WO2006/116456 und EP 1678232 beschriebenen, eingesetzt werden. Bevorzugte NOP sind solche, die auf Basis von z.B. Rizinusöl, Sojabohnenöl, Erdnußöl, Rapsöl, Palmöl oder Sonnenblumenöl erhalten werden können. Mit Ausnahme des Rizinusöls enthalten die vorgenannten Pflanzenöle keine Hydroxylgruppen. Die Einführung der zur Polyurethanbildung erforderlichen Hydroxylgruppe kann nach verschieden Verfahren erfolgen, von denen hier einige beispielhaft genannt seien: Ozonolyse mit anschließender Hydrierung [Petrovic ZS, Zhang W, Javni I, Biomacromolecules 2005; 6: 713-9]; Epoxidierung mit anschließender Ringöffnung (WO 2009/058367; US6433121); Hydroformulierung mit anschließender Hydrierung (WO2004096744); Luftoxidation mit anschließender Ringöffnung oder Hydroformulierung (US 2006/0229375); mikrobiologische Überführung in OH-funktionelle Polyole [Hou CT, Adv. Appl. Microbiol. 1995; 41: 1-23]. Die OH-funktionalisierten Biopolyole können entweder direkt oder nach einer Alkoxylierung zur Herstellung von Polyurethanschäumen eingesetzt werden. Die Alkoxylierung der OH-funktionalisierten Biopolyole kann nach dem Verfahren der alkalischen Alkoxylierung oder unter Verwendung von DMC-Katalysatoren erfolgen.

Eine weitere Klasse von Polyolen sind solche, die als Prepolymere durch Umsetzung von Polyol mit Isocyanat in einem Molverhältnis von 100 zu 1 bis 5 zu 1, bevorzugt 50 zu 1 bis 10 zu 1 erhalten werden. Solche Prepolymere werden vorzugsweise gelöst in Polyol eingesetzt, wobei das Polyol bevorzugt dem zur Herstellung der Prepolymeren eingesetzten Polyol entspricht.

Noch eine weitere Klasse von Polyolen stellen die sogenannten Füllkörperpolyole (Polymerpolyole) dar. Diese zeichnen sich dadurch aus, dass sie feste organische Füllstoffe bis zu einem Feststoffgehalt von 40 Gew.-% oder mehr in disperser Verteilung enthalten. Man kann unter anderem verwenden:
SAN-Polyole: Dies sind hochreaktive Polyole, welche ein Copolymer auf der Basis Styrol/Acrylnitril (SAN) dispergiert enthalten.
PHD-Polyole: Dies sind hochreaktive Polyole, welche Polyharnstoff ebenfalls in dispergierter Form enthalten.
PIPA-Polyole: Dies sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 Gew.-%, bezogen auf das Polyol liegen kann, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaums.

Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung.

Je nach Feststoffgehalt der Polyole werden diese alleine oder in Abmischung mit den oben genannten ungefüllten Polyolen eingesetzt.

Als Treibmittel können die bekannten Treibmittel eingesetzt werden. Vorzugsweise werden bei der Herstellung des Polyurethanschaums Wasser, Methylenchlorid, Pentan, Alkane, halogenierte Alkane, Aceton und/oder Kohlendioxid als Treibmittel eingesetzt.

Das Wasser kann der Mischung direkt zugegeben werden oder aber als Nebenkomponente eines der Edukte, wie z. B. der Polyolkomponente, mit dieser der Mischung zugegeben werden.

Neben physikalischen Treibmitteln und ggf. Wasser können auch andere chemische Treibmittel eingesetzt werden, die mit Isocyanaten unter Gasentwicklung reagieren, wie beispielsweise Ameisensäure.

Als Katalysatoren können in der Mischung solche vorhanden sein, die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N,N-Dimethylhexadecylamin, Oxaazasilinan, N-Ethylmorpholin, Tris(dimethylaminopropyl)hexahydro-1,3,5-triazin, N,N-Dimethylaminoethanol, Dimethylaminoethoxyethanol und Bis(dimethylaminoethyl)ether, Zinkverbindungen bzw. -salze, Zinnverbindungen bzw. -salze, bevorzugt Zinnricinolat, und Kaliumsalze wie Kaliumacetat und Kalium-2-ethylhexanoat. Bevorzugt werden als Katalysatoren solche eingesetzt, die Zinnricinolat und/oder N,N-Dimethylhexadecylamin aufweisen.

Geeignete Einsatzmengen richten sich nach dem Typ des Katalysators und liegen üblicherweise im Bereich von 0,02 bis 5 pphp (= Gewichtsteilen bezogen auf 100 Gewichtsteile Polyol).

Mittels des erfindungsgemäßen Verfahrens ist ein Polyurethanschaum, insbesondere ein Polyurethanweichschaum erhältlich, der sich insbesondere dadurch auszeichnet, dass er, wie oben dargestellt eine vergröberte Zellstruktur aufweist, so dass also eine Zunahme der Zellgröße und damit eine Abnahme der Anzahl der Zellen pro Längeneinheit, welche z.B. mikroskopisch ermittelbar ist, zu beobachten ist im Vergleich zu Polyurethanschaum, der ansonsten in analoger Weise, aber ohne Einsatz des Wachses hergestellt wird.

Ein weiterer Gegenstand der vorliegenden Erfindung ist dementsprechend ein Polyurethanschaum, erhältlich durch ein erfindungsgemäßes Verfahren wie zuvor beschrieben.

Insbesondere kann es sich bei dem Polyurethanschaum um einen Polyurethan-Weichschaum, Heißweichschaum, Hartschaum, Esterschaum, viscoelastischen Weichschaum oder High Resilience-Schaum (HR-Schaum; Kaltschaum) handeln, insbesondere um einen HR-Blockschaum, Weich-Blockschaum oder HR-Formschaum.

Insbesondere bei der Herstellung von HR-Blockschaum ermöglicht die vorliegende Erfindung überaus gute Resultate mit Blick auf die Vergröberung des Schaumes.

In einer besonders bevorzugten Ausführungsform ist der erfindungsgemäß erzeugte Polyurethanschaum also ein HR-Blockschaum.

Ein weiterer Gegenstand der Erfindung liegt in der Verwendung von Wachsen mit einem Erstarrungspunkt im Bereich von 40°C bis 80°C als Additiv bei der Herstellung von Polyurethanschäumen zur Vergröberung der Schaumstruktur, nach Maßgabe von Anspruch 7.

Die Verwendung von Wachsen mit einem Erstarrungspunkt im Bereich von 40°C bis 80°C als Additiv bei der Herstellung von Polyurethanschäumen zur Steigerung der Fähigkeit des resultierenden Schaums Feuchtigkeit, insbesondere Wasserdampf, abzuführen, wird offenbart.

Die Verwendung von Wachsen mit einem Erstarrungspunkt im Bereich von 40°C bis 80°C als Additiv bei der Herstellung von Polyurethanschäumen zur Steigerung der Fähigkeit des resultierenden Schaums Wärme abzuführen, wird offenbart.

Bezüglich bevorzugter Ausführungsformen dieser vorgenannten Verwendungen, insbesondere mit Blick auf das eingesetzte Wachs, wird auf die vorangegangene Beschreibung verwiesen.

Ein weiterer Gegenstand der Erfindung ist eine Zusammensetzung zur Herstellung von Polyurethanschaum, umfassend wenigstens einen Urethan- und/oder Isocyanurat-Katalysator, wenigstens ein Treibmittel, wenigstens eine Isocyanatkomponente und wenigstens eine Polyolkomponente, wobei als Additiv Wachs mit einem Erstarrungspunkt im Bereich von 40°C bis 80°C enthalten ist, nach Maßgabe von Anspruch 8.

Der Begriff der Zusammensetzung in diesem Sinne umfasst auch Mehrkomponentenzusammensetzungen, bei denen zwei oder mehr Komponenten zu mischen sind, um eine chemische Reaktion zu erzeugen, welche zur Herstellung von Polyurethanschaum führt. Der Begriff der Zusammensetzung umfasst insbesondere das Gemisch (Mischung) wenigstens eines Urethan- und/oder Isocyanurat-Katalysators, wenigstens eines Treibmittels, wenigstens einer Isocyanatkomponente und wenigstens einer Polyolkomponente sowie von Wachs mit einem Erstarrungspunkt im Bereich von 40°C bis 80°C.

Eine bevorzugte erfindungsgemäße Zusammensetzung zur Herstellung von Polyurethanschaum kann Polyol z.B. in Mengen von 25 bis 75 Gew.-%, Wasser z.B. in Mengen von 1 bis 5 Gew.-%, Katalysator z.B. in Mengen von 0,05 bis 2 Gew.-%, physikalisches Treibmittel z.B. in Mengen von 0 bis 25 Gew.-% (z.B. 0,1 bis 25 Gew.-%), Stabilisatoren (wie z. B. Si-haltige und nicht Si-haltige, insbesondere Si-haltige und nicht Si-haltige organische Stabilisatoren und Tenside) z.B. in Mengen von 0,3 bis 5 Gew.-%, Isocyanat z.B. in Mengen von 20 bis 50 Gew.% und erfindungsgemäß einzusetzendes Wachs z.B. in Mengen von 0,00001 bis 1 Gew.-% (vorzugsweise 0,00005 bis 0,5 Gew.-%), enthalten.

Bezüglich bevorzugter Ausführungsformen dieser vorgenannten Zusammensetzungen wird insbesondere mit Blick auf das eingesetzte Wachs auf die vorangegangene Beschreibung verwiesen.

Mit dem erfindungsgemäßen Polyurethanschaum sind Artikel zugänglich, die diesen Polyurethanschaum enthalten oder aus ihm bestehen. Die erfindungsgemäßen Polyurethanschäume können insbesondere in der Möbel-, Matratzen-, Fahrzeug-, Täschner-, Schuh- sowie Textilindustrie, aber auch im Haushalt und im technischen Sektor Verwendung finden. Entsprechende Artikel können z.B. Möbelpolster, Kühlschrankisolierungen, Sprühschäume, (Metall-)Verbundelemente für die (Bau-)Isolierung, Matratzen, Kopfkissen, Autositze oder Automobilkopfstützen sein. Insbesondere Matratzen, Polster sowie Kissen, also Artikel bei denen der Feuchtigkeitstransport wichtig ist, sind besonders geeignet.

Der Gegenstand der vorliegenden Erfindung wird nachfolgend an Hand von Beispielen näher erläutert, ohne dass der Gegenstand der Erfindung auf diese beispielhaften Ausführungsformen beschränkt sein soll.

### Beispiele

Als Rohstoffe zur Herstellung aller im Folgenden genannten Schäume wurden die in Tabelle 1 genannten Rohstoffe verwendet.

**Tabelle 1: Rohstoffe zur Herstellung der Schäume**

| | |
|---|---|
| Polyol 1 | Polyetherol trifunktionell, MW 3500, OHZ 35, BAYER AG |
| Polyol 2 | Polyetherol trifunktionell, OHZ 29, 20% Polyharnstoff-Dispersion, BAYER AG |
| Polyol 3 | Polyetherol trifunktionell, OHZ 48, MW 3500, DOW Chemicals |
| Polyol 4 | Polyetherol trifunktionell, OHZ 20, 45% Styrolacrylnitril-gefüllt, DOW Chemicals |
| Polyol 5 | Polyetherol trifunktionell, OHZ 32, BAYER AG |
| Polyol 6 | Polyetherol trifunktionell, OHZ 30, 15% Styrolacrylnitril-gefüllt, DOW Chemicals |
| Katalysator 1 | Tegoamin BDE (70% Bis(-2-dimethylaminoethylether in Dipropylenglykol), Evonik Industries AG |
| Katalysator 2 | Tegoamin DEOA 85 (Diethanolamin 85% in Wasser), Evonik Industries AG |
| Katalysator 3 | Tegoamin 33 (33% Triethylendiamin in Dipropylenglykol), Evonik Industries AG |
| Katalysator 4 | Triethanolamin 99% Evonik Industries AG |
| Katalysator 5 | Tegoamin DMEA (Dimethylethanolamin), Evonik Industries AG |
| Katalysator 6 | Kosmos 29 (Zinnoctoat), Evonik Industries AG (hier 10% in Polyol 1 oder 3 oder 6 gelöst) |
| Katalysator 7 | Tegoamin B 75 (75% Tegoamin 33, 25% Tegoamin BDE), Evonik Industries AG |
| Vernetzer 1 | Glycerin, technische Qualität |
| Vernetzer 2 | Ortegol 204, (verspätet wirkende wässrige Vernetzerzubereitung), Evonik Industries AG |
| Silikonstabilisator 1 | Tegostab BF 2470, Evonik Industries AG (Zubereitung von organomodifizierten Polysiloxanen) |
| Silikonstabilisator 2 | Tegostab B 8680, Evonik Industries AG (Zubereitung von organomodifizierten Polysiloxanen) |
| Silikonstabilisator 3 | Tegostab B 8724 LF2, Evonik Industries AG (Zubereitung von organomodifizierten Polysiloxanen) |
| Silikonstabilisator 4 | Tegostab B 8715 LF2, Evonik Industries AG(Zubereitung von organomodifizierten Polysiloxanen) |
| Silikonstabilisator 5 | Tegostab B 8742 LF2, Evonik Industries AG(Zubereitung von organomodifizierten Polysiloxanen) |
| Silikonstabilisator 6 | Tegostab B 8707 LF2, Evonik Industries AG(Zubereitung von organomodifizierten Polysiloxanen) |
| Gemisch 1 | Wachsdispersion: Mikrowachs mit Erstarrungspunkt im Bereich von 60 bis 75°C dispergiert in Sorbitanester |
| Isocyanat 1 | Toluoldiisocyanat, TDI 80, (80% 2,4-Isomere, 20% 2,6-Isomer, Bayer MaterialScience AG |
| Isocyanat 2 | VT 60/40, (60% TDI Toluoldiisocyanat, 40% MDI Desmodur 44V20), Bayer MaterialScience AG |

### Beispiel 1: Anwendungsgebiet HR-Blockschaum

Für den anwendungstechnischen Vergleich mit dem erfindungsgemäßen Wachsadditiv wurde nachfolgende Formulierung in Tabelle 2 verwendet.

**Tabelle 2: Formulierung zur Herstellung von HR-Blockschaum**

| (Angaben in Gewichtsteilen pro 100 Gewichtsteile Polyol) | | | |
|---|---|---|---|
| **Beispiel** | **V1** | **E1** | **E2** |
| **Polyol 1** | 60 | 60 | 60 |
| **Polyol 2** | 40 | 40 | 40 |
| **Wasser, total** | 4,20 | 4,20 | 4,20 |
| **Wasser separat** | 3,78 | 3,78 | 3,78 |
| **Isocyanat Index** | 95,5 | 95,5 | 95,5 |
| **Isocyanat 1** | 47,7 | 47,7 | 47,7 |
| | | | |
| **Katalysator 1** | 0,07 | 0,07 | 0,07 |
| **Katalysator 2** | 1,73 | 1,73 | 1,73 |
| **Katalysator 3** | 0,5 | 0,5 | 0,5 |
| **Gemisch 1** | 0 | 0,05 | 0,1 |
| **Silikonstabilisator 2** | 1,0 | 1,0 | 1,0 |

Die Schäume wurden in der bekannten Art und Weise hergestellt, indem man alle Komponenten außer dem Isocyanat in einem Becher mischte, anschließend das Isocyanat zugab und bei hoher Rührerdrehzahl schnell einrührte. Dann gab man das Reaktionsgemisch in eine 27 cm x 27 cm große, offene Metallkiste mit einer Wandhöhe von 27 cm, die mit Papier ausgekleidet war. Dabei entstand ein Schaumstoff, der die nachfolgend beschriebenen physikalischen Eigenschaften hatte.

Für die Bestimmung der Zellstruktur wurde der Schaumblock aufgeschnitten und die oberste Ebene der Schnittfläche wurde mit einem schwarzen Stift eingefärbt. Mit einem Vergrößerungsglas wurde optisch die Anzahl der Zellen gezählt, die sich innerhalb eines Zentimeters befanden.

Des Weiteren wurden auch die Aufdruckkräfte (Force-To-Crush, FTC) gemessen. Hierbei wurden die Schäume 10-mal auf 50 % ihrer Höhe komprimiert. Hierbei ist der 1. Messwert (FTC 1 in Newton) ein Maß für die Offenzelligkeit des Schaums. Anschließend wurde der Schaum (manuell) vollständig aufgedrückt um beim 11. Messwert (FTC 11 in Newton) die Härte des aufgedrückten Schaums bestimmen zu können. Der Wert 1-11 ist ein Maß für die Aufdrückbarkeit eines Schaumes und ist rechnerisch die Differenz zwischen einem gerade produzierten noch unbeschädigten Schaum und dem komplett aufgedrückten Schaum.

In der Tabelle 3 sind die vergleichenden und erfindungsgemäßen Beispiele zusammengefasst. Des Weiteren wurden die folgenden mechanischen Eigenschaften gemessen:
- Druckspannung bei 40% Kompression gemäß DIN EN ISO 3386
- Druckverformungsrest gemäß DIN EN ISO 1856
- Airflow gemäß DIN EN ISO 7231
- Kugel-Rückprallelastizität gemäß DIN EN ISO 8307
- Rohdichte kg/m3 gemäß DIN EN ISO 845
- Wet Compression Set, durchgeführt nach der Toyota-Methode TSM7100 G, Artikel 4.8.2 (Compression Set after Humidity Resistance) Seite 12
- Porosität (Backpressure Methode): EN ISO 29053

**Tabelle 3: Ergebnisse der physikalischen Eigenschaften der Schäume**

| | **V1** | **E1** | **E2** |
|---|---|---|---|
| **Dichte / kg/m3** | 26,5 | 25,9 | 25,4 |
| **Stauchhärte (Druckspannung) bei 40% Kompression / Deformation / kPa** | 1,8 | 1,8 | 1,8 |
| **Druckverformungsrest Compresssion Set / % [70%, 22h, 70°C]** | 42,0 | 41,3 | 27,3 |
| **Druckverformungsrest Wet Set / % [50%, 22h, 50°C, 95%RH]** | 28,7 | 27,3 | 28,0 |
| **Zellen / cm** | 11 | 10 | 9 |
| **FTC 1 / N** | 150 | 161 | 171 |
| **FTC 11 / N** | 64 | 67 | 68 |
| **FTC 1-11 / N** | 86 | 94 | 103 |
| **Airflow / scfm** | 0,36 | 0,42 | 0,40 |
| **Rückprallelastizität / %** | 65 | 65 | 65 |

Die Ergebnisse der Dichtemessung zeigen, dass es nicht zu signifikanten Dichteschwankungen kommt. Die Stauchhärte wird ebenfalls nicht beeinflusst. Die Anzahl der Zellen pro Zentimeter zeigt eine Abnahme der Zellen pro Zentimeter bei Einsatz des Wachsadditives, was einer Vergröberung des Schaumes entspricht.

### Beispiel 2: Anwendungsgebiet HR-Blockschaum

Für den anwendungstechnischen Vergleich mit dem erfindungsgemäßen Additivgemisch wurde nachfolgende Schaumformulierung in Tabelle 4 verwendet.

**Tabelle 4: Formulierung zur Herstellung von HR-Blockschaum**

| (Angaben in Gewichtsteilen pro 100 Gewichtsteile Polyol) | | | | |
|---|---|---|---|---|
| **Beispiel** | **V2** | **E3** | **E4** | **E5** |
| **Polyol 1** | 100 | 100 | 100 | 100 |
| **Isocyanat Index** | 101 | 101 | 101 | 101 |
| **Isocyanat 1** | 41,02 | 41,02 | 41,02 | 41,02 |
| **Wasser, total** | 3,0 | 3,0 | 3,0 | 3,0 |
| **Wasser, separat** | 2,18 | 2,18 | 2,18 | 2,18 |
| **Katalysator 1** | 0,1 | 0,1 | 0,1 | 0,1 |
| **Katalysator 2** | 0,58 | 0,58 | 0,58 | 0,58 |
| **Katalysator 3** | 0,4 | 0,4 | 0,4 | 0,4 |
| **Katalysator 6** | 0,15 | 0,15 | 0,15 | 0,15 |
| **Gemisch 1** | 0 | 0,05 | 0,1 | 0,2 |
| **Vernetzer 2** | 3,0 | 3,0 | 3,0 | 3,0 |
| **Silikonstabilisator 3** | 1,0 | 1,0 | 1,0 | 1,0 |

Die Schäume wurden in der bekannten Art und Weise hergestellt, indem man alle Komponenten außer dem Isocyanat in einem Becher mischte, anschließend das Isocyanat zugab und bei hoher Rührerdrehzahl schnell einrührte. Dann gab man das Reaktionsgemisch in eine 27 cm x 27 cm große, offene Metallkiste mit einer Wandhöhe von 27 cm, die mit Papier ausgekleidet war. Dabei entstand ein Schaumstoff, der die nachfolgend beschriebenen physikalischen Eigenschaften hatte.

Für die Bestimmung der Zellstruktur und der FTC-Werte wurde wie zuvor verfahren.

In der Tabelle 5 sind die vergleichenden und erfindungsgemäßen Beispiele zusammengefasst.

**Tabelle 5: Ergebnisse der physikalischen Eigenschaften der Schäume**

| | **V2** | **E3** | **E4** | **E5** |
|---|---|---|---|---|
| **Dichte / kg/m3** | 32,2 | 32,1 | 32,0 | 31,9 |
| **Stauchhärte (Druckspannung) bei 40% Kompression / Deformation / kPa** | 2,0 | 2,0 | 2,1 | 2,2 |
| **Druckverformungsrest Compression Set / % [70%, 22h, 70°C]** | 18,0 | 11,3 | 6,0 | 4,0 |
| **Druckverformungsrest Wet Set / % [50%, 22h, 50°C, 95%RH]** | 20,7 | 19,3 | 16,7 | 19,3 |
| **Zellen / cm** | 11 | 10 | 9 | 8 |
| **FTC 1 / N** | 188 | 187 | 174 | 161 |
| **FTC 11 / N** | 68 | 70 | 69 | 73 |
| **FTC 1-11 / N** | 120 | 117 | 105 | 88 |
| **Airflow / scfm** | 0,47 | 0,45 | 0,56 | 0,47 |
| **Rückprallelastizität** | 65 | 65 | 65 | 65 |

Die Ergebnisse der Dichtemessung zeigen, dass es nicht zu signifikanten Dichteschwankungen kommt. Die Stauchhärte wird ebenfalls nicht bzw. kaum beeinflusst. Die Anzahl der Zellen pro Zentimeter zeigt eine abnehmende Anzahl der Zellen pro Zentimeter mit zunehmender Menge des verwendeten Gemisches 1, was einer Vergröberung des Schaumes entspricht.

### Beispiel 3: Anwendungsgebiet konventioneller Weich-Blockschaum

Für den anwendungstechnischen Vergleich mit dem erfindungsgemäßen Additivgemisch wurde nachfolgende Schaumformulierung in Tabelle 6 verwendet.

**Tabelle 6: Formulierung zur Herstellung von Weich-Blockschaum**

| (Angaben in Gewichtsteilen pro 100 Gewichtsteile Polyol) | | | | | |
|---|---|---|---|---|---|
| **Beispiel** | **V3** | **E6** | **E7** | **E8** | **E9** |
| **Polyol 3** | 100 | 100 | 100 | 100 | 100 |
| **Isocyanat Index** | 110 | 110 | 110 | 110 | 110 |
| **Isocyanat 1** | 40,10 | 40,10 | 40,10 | 40,10 | 40,1 |
| **Wasser, total** | 3,0 | 3,0 | 3,0 | 3,0 | 3,0 |
| **Katalysator 6** | 0,15 | 0,15 | 0,15 | 0,15 | 0,11 |
| **Katalysator 7** | 0,15 | 0,15 | 0,15 | 0,15 | 0,15 |
| **Gemisch 1** | 0 | 0,5 | 1,0 | 2,0 | 2,0 |
| **Silikonstabilisator 1** | 0,8 | 0,8 | 0,8 | 0,8 | 0,8 |

Die Schäume wurden in der bekannten Art und Weise hergestellt, indem man alle Komponenten außer dem Isocyanat in einem Becher mischte, anschließend das Isocyanat zugab und bei hoher Rührerdrehzahl schnell einrührte. Dann gab man das Reaktionsgemisch in eine 27 cm x 27 cm große, offene Metallkiste mit einer Wandhöhe von 27 cm, die mit Papier ausgekleidet war. Dabei entstand ein Schaumstoff, der die nachfolgend beschriebenen physikalischen Eigenschaften hatte.

Für die Bestimmung der Zellstruktur wurde wie zuvor verfahren.

**Tabelle 7: Ergebnisse der physikalischen Eigenschaften der Schäume**

| | **V3** | **E6** | **E7** | **E8** | **E9** |
|---|---|---|---|---|---|
| **Dichte / kg/m³** | 30,3 | 30,3 | 30,8 | 31,0 | 31,8 |
| **Stauchhärte (Druckspannung) bei 40% Kompression / Deformation / kPa** | 4,2 | 4,2 | 3,9 | 4,2 | 3,8 |
| **Druckverformungsrest Compression Set / % [70%, 22h, 90°C]** | 0,0 | 0,0 | 0,0 | 0,0 | 0,0 |
| **Wet Set / % [50%, 22h, 50°C, 95%RH]** | 4,0 | 4,0 | 4,0 | 4,0 | 0 |
| **Zellen / cm** | 13,5 | 13 | 13 | 12,5 | 12,0 |
| **Airflow / scfm** | 3,01 | 2,55 | 2,31 | 1,84 | 2,77 |
| **Rückprallelastizität / %** | 50 | 50 | 50 | 50 | 50 |
| **Porosität / mm Wassersäule** | 26,2 | 30,2 | 33,6 | 50,0 | 23,2 |

Die Ergebnisse der Dichtemessung zeigen, dass es nicht zu signifikanten Dichteschwankungen kommt. Die Stauchhärte wird ebenfalls kaum beeinflusst. Die Anzahl der Zellen pro Zentimeter zeigt eine abnehmende Tendenz mit zunehmender Menge des verwendeten Gemisches 1, was einer Vergröberung des Schaumes entspricht. Außerdem kann festgestellt werden, dass die Geschlossenzelligkeit mit zunehmendem Anteil des Gemisches 1 leicht zunimmt, was durch die Eigenschaft der Porosität sichtbar wird. Durch eine leichte Anpassung der Schaumformulierung (E9) kann der Schaum wieder offenzellig eingestellt werden.

### Beispiel 4: Anwendungsgebiet HR-Formschaum mit MDI/TDI

Für den anwendungstechnischen Vergleich mit dem erfindungsgemäßen Additivgemisch wurde nachfolgende Schaumformulierung in Tabelle 8 verwendet.

**Tabelle 8: Formulierung zur Herstellung von HR-Formschaum**

| (Angaben in Gewichtsteilen pro 100 Gewichtsteile Polyol) | | | | |
|---|---|---|---|---|
| **Beispiel** | **V4** | **E10** | **E11** | **E12** |
| **Polyol 1** | 100 | 100 | 100 | 100 |
| **Isocyanat Index** | 102 | 102 | 102 | 102 |
| **Isocyanat 2** | 46,24 | 46,24 | 46,24 | 46,24 |
| **Wasser, total** | 3,0 | 3,0 | 3,0 | 3,0 |
| **Katalysator 3** | 0,6 | 0,6 | 0,6 | 0,6 |
| **Katalysator 4** | 2,0 | 2,0 | 2,0 | 2,0 |
| **Katalysator 5** | 0,2 | 0,2 | 0,2 | 0,2 |
| **Gemisch 1** | 0 | 0,05 | 0,1 | 0,2 |
| **Silikonstabilisator 4** | 0,6 | 0,6 | 0,6 | 0,6 |

Die Schäume wurden in der bekannten Art und Weise hergestellt, indem man alle Komponenten außer dem Isocyanat in einem Becher mischte, anschließend das Isocyanat zugab und bei hoher Rührerdrehzahl schnell einrührte. Dann gab man das Reaktionsgemisch in eine quaderförmige Form aus Aluminium mit den Abmessungen 40x40x10 cm, die auf eine Temperatur von 40°C erwärmt war und ließ die Masse für 10 Minuten aushärten.

Die Bestimmung der FTC-Werte und der Anzahl der Zellen pro Zentimeter erfolgte wie zuvor.

**Tabelle 9: Ergebnisse der physikalischen Eigenschaften der Schäume**

| | **V4** | **E10** | **E11** | **E12** |
|---|---|---|---|---|
| **Dichte / kg/m³** | 46,0 | 46,1 | 46,0 | 46,1 |
| **Stauchhärte (Druckspannung) bei 40% Kompression / Deformation in kPa** | 2,9 | 2,9 | 3,0 | 3,3 |
| **Druckverformungsrest / Compression Set / % [70%, 22h, , 70°C]** | 0,0 | 0,0 | 0,0 | 0,0 |
| **Druckverformungsrest Wet Set / % [50%, 22h, , 50°C, 95%RH]** | 0,0 | 0,0 | 0,0 | 0,0 |
| **Zellen / cm** | 10 | 9 | 8 | 5,5 |
| **FTC 1 / N** | 1047 | 864 | 716 | 542 |
| **FTC 11 / N** | 114 | 106 | 125 | 129 |
| **FTC 1-11 / N** | 933 | 758 | 591 | 413 |
| **Rückprallelastizität / %** | 73 | 72 | 71 | 70 |

Die Ergebnisse der Dichtemessung zeigen, dass es nicht zu signifikanten Dichteschwankungen kommt. Die Stauchhärte wird ebenfalls nur minimal beeinflusst. Die Anzahl der Zellen pro Zentimeter zeigt eindeutig eine abnehmende Anzahl der Zellen pro Zentimeter mit zunehmender Menge des verwendeten Gemisches 1, was einer Vergröberung des Schaumes entspricht. Außerdem kann festgestellt werden, dass die Offenzelligkeit mit zunehmendem Anteil des Gemisches 1 signifikant zunimmt, was der Wert FTC 1 deutlich anzeigt.

### (Hohe FTC Werte = hohe Geschlossenzelligkeit, niedrige FTC Werte = hohe Offenzelligkeit)

### Beispiel 5: Anwendungsgebiet HR-Formschaum mit TDI

Für den anwendungstechnischen Vergleich mit dem erfindungsgemäßen Additivgemisch wurde nachfolgende Schaumformulierung in Tabelle 10 verwendet.

**Tabelle 10: Formulierung zur Herstellung von HR-Formschaum**

| (Angaben in Gewichtsteilen pro 100 Gewichtsteile Polyol) | | | | |
|---|---|---|---|---|
| **Beispiel** | **V5** | **E13** | **E14** | **E15** |
| **Polyol 4** | 26,67 | 26,67 | 26,67 | 26,67 |
| **Polyol 5** | 73,33 | 73,33 | 73,33 | 73,33 |
| **Isocyanat Index** | 98 | 98 | 98 | 98 |
| **Isocyanat 1** | 46,3 | 46,3 | 46,3 | 46,3 |
| **Wasser, total** | 3,98 | 3,98 | 3,98 | 3,98 |
| **Wasser, separat** | 3,83 | 3,83 | 3,83 | 3,83 |
| **Katalysator 1** | 0,06 | 0,06 | 0,06 | 0,06 |
| **Katalysator 2** | 1,0 | 1,0 | 1,0 | 1,0 |
| **Katalysator 3** | 0,41 | 0,41 | 0,41 | 0,41 |
| **Vernetzer 1** | 0,6 | 0,6 | 0,6 | 0,6 |
| **Gemisch 1** | 0 | 0,1 | 0,2 | 0,3 |
| **Silikonstabilisator 5** | 0,7 | 0,7 | 0,7 | 0,7 |

Die Schäume wurden in der bekannten Art und Weise hergestellt, indem man alle Komponenten außer dem Isocyanat in einem Becher mischte, anschließend das Isocyanat zugab und bei hoher Rührerdrehzahl schnell einrührte. Dann gab man das Reaktionsgemisch in eine quaderförmige Form mit den Abmessungen 40x40x10 cm, die auf eine Temperatur von 67°C erwärmt war und ließ die Masse bei Formulierung für 6 Minuten aushärten.

Die Bestimmung der FTC-Werte und der Anzahl der Zellen pro Zentimeter erfolgte wie zuvor.

**Tabelle 11: Ergebnisse der physikalischen Eigenschaften der Schäume**

| | **V5** | **E13** | **E14** | **E15** |
|---|---|---|---|---|
| **Dichte / kg/m³** | 33,1 | 32,7 | 32,9 | 32,8 |
| **Stauchhärte (Druckspannung) bei 40% Kompression / Deformation in kPa** | 3,0 | 2,9 | 3,0 | 3,1 |
| **Druckverformungsrest / Compression Set / % [70%, 22h, 70°C]** | 6,4 | 5,6 | 1,6 | 0,0 |
| **Druckverformungsrest / Wet Set / % [50%, 22h, 50°C, 95%RH]** | 28,0 | 31,2 | 27,2 | 22,4 |
| **Zellen / cm** | 15 | 14 | 11 | 9 |
| **FTC 1 / N** | 1927 | 1975 | 2038 | 1767 |
| **FTC 11 / N** | 158 | 168 | 180 | 181 |
| **FTC 1-11 / N** | 1769 | 1807 | 1858 | 1586 |
| **Rückprallelastizität / %** | 60 | 58 | 54 | 50 |

Die Ergebnisse der Dichtemessung zeigen, dass es nicht zu signifikanten Dichteschwankungen kommt. Die Stauchhärte wird nicht negativ beeinflusst. Die Anzahl der Zellen pro Zentimeter zeigt eindeutig eine abnehmende Tendenz mit zunehmender Menge des verwendeten Gemisches 1, was einer Vergröberung des Schaumes entspricht. Außerdem kann festgestellt werden, dass die Offenzelligkeit mit zunehmendem Anteil des Gemisches 1 zunimmt, was der Wert FTC 1 deutlich anzeigt.

### Beispiel 6: Anwendungsgebiet HR-Blockschaum (Maschinenschäume)

Es wurden Schaumstoffblöcke auf einer Niederdruckverschäummaschine der Firma Polytec EMC Typ DG 107 in ansonsten üblicher Weise hergestellt. Die Verschäummaschine wurde mit den folgenden Parametern betrieben:
Ausstoss A-Komponente (Polyolmischung): 2,4 kg/min
Pumpendruck Polyol: 15 bar
Ausstoss B-Komponente(Isocyanat): 0,66 kg/min
Pumpendruck Isocyanat: 10 bar
Rotationsgeschwindigkeit: 3000 U/min
Arbeitsvordruck 5,5 bar

Zur Herstellung der Schaumblöcke wurde die in Tabelle 12 aufgeführte Formulierung verwendet. Für jede der drei Verschäumungen wurden alle Rohstoffe außer dem Isocyanat miteinander vermischt und in den Vorratsbehälter als Polyolmischung der Maschine gefüllt. Diese Polyolmischung wurde mit dem Isocyanat im jeweiligen Mischungsverhältnis im Mischkopf miteinander verrührt/vermischt. Das Beispiel V6 stellt den Vergleichsversuch dar, die Beispiele E16 und E17 sind erfindungsgemäße Beispiele.

**Tabelle 12: Formulierung zur Herstellung von HR-Blockschaum**

| (Angaben in Gewichtsteilen pro 100 Gewichtsteile Polyol) | | | |
|---|---|---|---|
| **Beispiel** | **V6** | **E16** | **E17** |
| **Polyol 6** | 100 | 100 | 100 |
| **Isocyanat Index** | 105 | 105 | 105 |
| **Isocyanat 1** | 28,5 | 28,5 | 28,5 |
| **Wasser, total** | 2,00 | 2,00 | 2,00 |
| **Wasser, separat** | 1,79 | 1,79 | 1,79 |
| **Katalysator 1** | 0,05 | 0,05 | 0,05 |
| **Katalysator 2** | 1,41 | 1,41 | 1,41 |
| **Katalysator 3** | 0,15 | 0,15 | 0,15 |
| **Katalysator 6** | 0,15 | 0,15 | 0,15 |
| **Gemisch 1** | 0 | 0,075 | 0,15 |
| **Silikonstabilisator 6** | 0,6 | 0,6 | 0,6 |

Dann gab man das Reaktionsgemisch in eine 27 cm x 27 cm große, offene Metallkiste mit einer Wandhöhe von 27 cm, die mit Papier ausgekleidet war. Dabei entstand ein Schaumstoff, der die nachfolgend beschriebenen physikalischen Eigenschaften hatte.

Von dem erhaltenen Schaum wurde als erstes eine 5 cm dicke Scheibe von der Seite geschnitten. Des Weiteren wurde 1cm der Bodenzone entfernt Danach wurde der verbleibende Schaumkern in eine Schicht zu 12 cm Höhe geschnitten.

Die Bestimmung der FTC-Werte und der Anzahl der Zellen pro Zentimeter erfolgte ansonsten wie zuvor.

Die Ergebnisse dieser Bestimmungen sind in Tabelle 13 wiedergegeben.

**Tabelle 13: Ergebnisse der physikalischen Eigenschaften**

| | **V6** | **E16** | **E17** |
|---|---|---|---|
| **Zellen / cm** | 10 | 9,5 | 8,5 |
| **FTC 1 / N** | 166 | 130 | 125 |
| **FTC 11 / N** | 129 | 106 | 105 |
| **FTC 1-11 / N** | 37 | 24 | 20 |

Bezüglich der Anzahl der Zellen zeigen die erfindungsgemäßen Beispiele, dass die Verwendung des Gemisches 1 auch in diesem Fall zu einer vergröberten Zellstruktur führt. Auch zeigt sich in den Aufdrückwerten (FTC1), dass die Schäume E16 und E17 offenzelliger sind.

## Patentansprüche

1. Verfahren zur Herstellung von Polyurethanschaum durch Umsetzung einer oder mehrerer Polyolkomponenten mit einer oder mehrerer Isocyanatkomponenten, **dadurch gekennzeichnet, dass** als Additiv Wachs mit einem Erstarrungspunkt im Bereich von 40°C bis 80°C, bestimmbar gemäß der ISO 2207, eingesetzt wird, wobei > 50 Gew.-% des einzusetzenden Wachses ein mikrokristallines Wachs ist, und wobei die Menge an Wachs so gewählt wird, dass pro 100 Gewichtsteile Polyol, umfassend alle eingesetzten Polyolkomponenten, 0,0001 bis 5 Gewichtsteile Wachs eingesetzt werden, und wobei das Wachs in dispergierter Form eingesetzt wird, wobei als Dispergiermittel organische Lösemittel fungieren.

2. Verfahren nach Anspruch 1, **dadurch gekennzeichnet, dass** das Wachs einen Erstarrungspunkt im Bereich von 50°C bis 80°C aufweist.

3. Verfahren nach Anspruch 1, **dadurch gekennzeichnet, dass** das Wachs einen Erstarrungspunkt im Bereich von 55°C bis 80°C aufweist.

4. Verfahren nach Anspruch 1, **dadurch gekennzeichnet, dass** das Wachs einen Erstarrungspunkt im Bereich von 60°C bis 75°C aufweist.

5. Verfahren nach einem der Ansprüche 1 bis 4, **dadurch gekennzeichnet, dass** das Wachs ausgewählt ist aus Mineralwachsen, synthetischen Wachsen oder deren Gemischen.

6. Verfahren nach einem der Ansprüche 1 bis 5, **dadurch gekennzeichnet, dass** das organische Lösemittel ausgewählt ist aus Estern ein oder mehrwertiger Alkohole, sowie Polyethern.

7. Verfahren nach einem der Ansprüche 1 bis 6, **dadurch gekennzeichnet, dass** das organische Lösemittel ausgewählt ist aus den Fettsäureestern ein oder mehrwertiger Alkohole.

8. Verfahren nach Anspruch 7, **dadurch gekennzeichnet, dass** das organische Lösemittel ausgewählt ist aus Glycerinester oder Sorbitolester.

9. Polyurethanschaum, erhältlich durch ein Verfahren gemäß einem der Ansprüche 1 bis 8.

10. Polyurethanschaum gemäß Anspruch 9, **dadurch gekennzeichnet, dass** es sich um einen Polyurethan-Weichschaum, Heißweichschaum, Hartschaum, Esterschaum, viscoelastischen Weichschaum oder High Resilience-Schaum (HR-Schaum) handelt.

11. Polyurethanschaum gemäß Anspruch 9 oder 10, **dadurch gekennzeichnet, dass** es sich um einen HR-Blockschaum, Weich-Blockschaum oder HR-Formschaum handelt.

12. Verwendung von Wachsen mit einem Erstarrungspunkt im Bereich von 40°C bis 80°C, bestimmbar gemäß der ISO 2207, als Additiv bei der Herstellung von Polyurethanschäumen zur Vergröberung der Schaumstruktur,
wobei > 50 Gew.-% des einzusetzenden Wachses ein mikrokristallines Wachs ist, und wobei die Menge an Wachs so gewählt wird, dass pro 100 Gewichtsteile Polyol, umfassend alle eingesetzten Polyolkomponenten, 0,0001 bis 5 Gewichtsteile Wachs eingesetzt werden, und wobei das Wachs in dispergierter Form eingesetzt wird, wobei als Dispergiermittel organische Lösemittel fungieren.

13. Zusammensetzung zur Herstellung von Polyurethanschaum, umfassend wenigstens einen Urethan- und/oder Isocyanurat-Katalysator, wenigstens ein Treibmittel, wenigstens eine Isocyanatkomponente und wenigstens eine Polyolkomponente, **dadurch gekennzeichnet, dass** als Additiv Wachs mit einem Erstarrungspunkt im Bereich von 40°C bis 80°C, bestimmbar gemäß der ISO 2207, enthalten ist,
wobei > 50 Gew.-% des einzusetzenden Wachses ein mikrokristallines Wachs ist, und wobei die Menge an Wachs so gewählt wird, dass pro 100 Gewichtsteile Polyol, umfassend alle eingesetzten Polyolkomponenten, 0,0001 bis 5 Gewichtsteile Wachs eingesetzt werden, und wobei das Wachs in dispergierter Form eingesetzt wird, wobei als Dispergiermittel organische Lösemittel fungieren.

## Claims

1. Process for production of polyurethane foam by reacting one or more polyol components with one or more isocyanate components, **characterized in that** wax having a congealing point in the range from 40°C to 80°C, determinable in accordance with ISO 2207, is employed as an additive, where > 50 wt% of the wax to be used is a microcrystalline wax, and where the amount of wax is chosen so as to employ from 0.0001 to 5 parts by weight per 100 parts by weight of polyol, comprehending all polyol components used, and where the wax is employed in a dispersed form where the dispersion medium comprises organic solvents.

2. Process according to Claim 1, **characterized in that** the wax has a congealing point in the range from 50°C to 80°C.

3. Process according to Claim 1, **characterized in that** the wax has a congealing point in the range from 55°C to 80°C.

4. Process according to Claim 1, **characterized in that** the wax has a congealing point in the range from 60°C to 75°C.

5. Process according to any one of Claims 1 to 4, **characterized in that** the wax is selected from mineral waxes, synthetic waxes or mixtures thereof.

6. Process according to any one of Claims 1 to 5, **characterized in that** the organic solvent is selected from esters of mono- or polyhydric alcohols, and also polyethers.

7. Process according to any one of Claims 1 to 6, **characterized in that** the organic solvent is selected from the fatty acid esters of mono- or polyhydric alcohols.

8. Process according to Claim 7, **characterized in that** the organic solvent is selected from glycerol ester or sorbitol ester.

9. Polyurethane foam obtainable by a process according to any one of Claims 1 to 8.

10. Polyurethane foam according to Claim 9, **characterized in that** it comprises a polyurethane flexible foam, hot-cure flexible foam, rigid foam, ester foam, viscoelastic flexible foam or high-resilience foam (HR foam).

11. Polyurethane foam according to Claim 9 or 10, **characterized in that** it comprises a slabstock HR foam, a slabstock flexible foam or a moulded HR foam.

12. Use of waxes having a congealing point in the range from 40°C to 80°C, determinable in accordance with ISO 2207, as an additive in the manufacture of polyurethane foams to coarsen the foam structure, where > 50 wt% of the wax to be used is a microcrystalline wax, and where the amount of wax is chosen so as to employ from 0.0001 to 5 parts by weight per 100 parts by weight of polyol, comprehending all polyol components used, and where the wax is employed in a dispersed form where the dispersion medium comprises organic solvents.

13. Composition for production of polyurethane foam, comprising at least one urethane and/or isocyanurate catalyst, at least one blowing agent, at least one isocyanate component and at least one polyol component, **characterized in that** wax having a congealing point in the range from 40°C to 80°C, determinable in accordance with ISO 2207, is present therein as an additive, where > 50 wt% of the wax to be used is a microcrystalline wax, and where the amount of wax is chosen so as to employ from 0.0001 to 5 parts by weight per 100 parts by weight of polyol, comprehending all polyol components used, and where the wax is employed in a dispersed form where the dispersion medium comprises organic solvents.

## Revendications

1. Procédé pour la préparation de mousse de polyuréthane par transformation d'un ou de plusieurs composants polyol avec un ou plusieurs composants isocyanate, **caractérisé en ce qu'**on utilise, comme additif, de la cire présentant un point de solidification dans la plage de 40°C à 80°C, pouvant être déterminé selon la norme ISO 2207, > 50% en poids de la cire à utiliser étant une cire microcristalline et la quantité de cire étant choisie de manière telle qu'on utilise, par 100 parties en poids de polyol, comprenant tous les composants polyol utilisés, 0,0001 à 5 parties en poids de cire et la cire étant utilisée sous une forme dispersée, les solvants organiques fonctionnant comme dispersant.

2. Procédé selon la revendication 1, **caractérisé en ce que** la cire présente un point de solidification dans la plage de 50 à 80°C.

3. Procédé selon la revendication 1, **caractérisé en ce que** la cire présente un point de solidification dans la plage de 55 à 80°C.

4. Procédé selon la revendication 1, **caractérisé en ce que** la cire présente un point de solidification dans la plage de 60 à 75°C.

5. Procédé selon l'une quelconque des revendications 1 à 4, **caractérisé en ce que** la cire est choisie parmi les cires minérales, les cires synthétiques ou leurs mélanges.

6. Procédé selon l'une quelconque des revendications 1 à 5, **caractérisé en ce que** le solvant organique est choisi parmi les esters d'alcools monovalents ou polyvalents ainsi que les polyéthers.

7. Procédé selon l'une quelconque des revendications 1 à 6, **caractérisé en ce que** le solvant organique est choisi parmi les esters d'acides gras d'alcools monovalents ou polyvalents.

8. Procédé selon la revendication 7, **caractérisé en ce que** le solvant organique est choisi parmi les esters de glycérol ou les esters de sorbitol.

9. Mousse de polyuréthane, pouvant être obtenue par un procédé selon l'une quelconque des revendications 1 à 8.

10. Mousse de polyuréthane selon la revendication 9, **caractérisée en ce qu'**il s'agit d'une mousse souple, d'une mousse souple à chaud, d'une mousse dure, d'une mousse d'ester, d'une mousse viscoélastique ou d'une mousse à résilience élevée (mousse HR) de polyuréthane.

11. Mousse de polyuréthane selon la revendication 9 ou 10, **caractérisée en ce qu'**il s'agit d'une mousse HR en bloc, d'une mousse souple en bloc ou d'une mousse HR façonnée.

12. Utilisation de cires présentant un point de solidification dans la plage de 40°C à 80°C, pouvant être déterminé selon la norme ISO 2207, comme additif lors de la fabrication de mousses de polyuréthane pour agrandir la structure de mousse,
> 50% en poids de la cire à utiliser étant une cire microcristalline et la quantité de cire étant choisie de manière telle qu'on utilise, par 100 parties en poids de polyol, comprenant tous les composants polyol utilisés, 0,0001 à 5 parties en poids de cire et la cire étant utilisée sous une forme dispersée, les solvants organiques fonctionnant comme dispersant.

13. Composition pour la fabrication de mousse de polyuréthane, comprenant au moins un catalyseur d'uréthane et/ou d'isocyanurate, au moins un agent gonflant, au moins un composant isocyanate et au moins un composant polyol, **caractérisée en ce que** de la cire présentant un point de solidification dans la plage de 40°C à 80°C, pouvant être déterminé selon la norme ISO 2207, est contenue, > 50% en poids de la cire à utiliser étant une cire microcristalline et la quantité de cire étant choisie de manière telle qu'on utilise, par 100 parties en poids de polyol, comprenant tous les composants polyol utilisés, 0,0001 à 5 parties en poids de cire et la cire étant utilisée sous une forme dispersée, les solvants organiques fonctionnant comme dispersant.
